# EUROPEAN PATENT APPLICATION

(11) **EP 1 755 129 A2**
(43) Date of publication of application: **21.02.2007**
(21) Application number: 06017165.9
(22) Date of filing: 17.08.2006
(51) Int. Cl.: G21C 9/004, G21C 15/18

(54) **Reactor containment vessel cooling equipment and nuclear power plant**

(30) Priority: 18.08.2005 JP 2005237132
(71) Applicant: KABUSHIKI KAISHA TOSHIBA, Tokyo (JP)
(72) Inventor: Tobimatsu, Toshimi, Minato-ku Tokyo (JP); Iwaki, Chikako, Minato-ku Tokyo (JP); Aoki, Kazuyoshi, Minato-ku Tokyo (JP); Yokobori, Seiichi, Minato-ku Tokyo (JP); Kojima, Yoshihiro, Minato-ku Tokyo (JP); Akinaga, Makoto, Minato-ku Tokyo (JP); Narabayashi, Tadashi, Minato-ku Tokyo (JP)
(74) Representative: HOFFMANN EITLE

(57) **Abstract**

A nuclear reactor containment vessel cooling equipment has: a dry well cooler casing (14) in a containment vessel (1), having an opening at its top and a shutter (38) at its lower part; a heat transfer tube (13) arranged at an upper part in the dry well cooler casing (14); a forced cooling water circulation system (32a) for feeding cooling water from outside of the containment vessel (1) into the heat transfer tube (13) by a pump (32); a blower (16) for mobilizing gas around the heat transfer tube (13); an external pool container (35) arranged outside the containment vessel (1) and above the heat transfer tube (13) and containing cooling water; and a gravity-driven cooling system (36) to supply cooling water in the external pool container (35) into the heat transfer tube (13), utilizing gravity.

## Description

### BACKGROUND OF THE INVENTION

This invention relates to cooling equipment of a nuclear reactor containment vessel using a forced cooling water circulation system and a gravity-driven cooling system, and to nuclear power plant including such a cooling equipment.

Techniques of arranging dry well coolers in the upper dry well of a conventional boiling water nuclear power plant for the purpose of cooling the inside of the nuclear reactor containment vessel are known (see Japanese Patent Application Laid-Open Publication No. 2001-215291). It has been discussed to utilize the dry well coolers in the event of a loss-of-coolant accident (LOCA) in order to suppress the pressure rise in the nuclear reactor containment vessel. For this purpose, an apparatus having two cooling systems including a forced circulation system and a gravity-driven cooling system for supplying cooling water from the outside of the containment vessel and adapted to use one of them in a switched manner has been proposed (see Japanese Patent Application Laid-Open Publication No. 2004-198118). The forced circulation system is designed to use a pump, whereas the gravity-driven cooling system can supply cooling water into the dry well coolers by natural circulation that utilizes gravity if the power supply is lost and the pump becomes inoperative.

However, the flow rate of cooling water by natural circulation in the gravity-driven cooling system is considerably lower than that of cooling water in the forced circulation system so that it is not possible to condense steam to a sufficient level in the event of a loss-of-coolant accident. Therefore, it is apprehended that the rise of the steam pressure in the inside of the nuclear reactor containment vessel that can take place in the event of a loss-of-coolant accident may not be suppressed satisfactorily. Additionally, the currently available cooling coil has heat transfer tubes that are meandering horizontally so that it is not possible to specify the flow direction of water of natural circulation and hence it is apprehended that an unstable phenomenon can appear when the gravity-driven cooling system is activated. Still additionally, non-condensing gas contained in steam partly remains in the casing of the dry well coolers so that it needs to be exhausted efficiently and effectively.

### SUMMARY OF THE INVENTION

In view of the above-identified problems, it is therefore an object of the present invention to provide nuclear reactor containment vessel cooling equipment that can reduce the steam pressure in the inside of the nuclear reactor containment vessel by utilizing the dry well coolers in an emergency situation. It is also an object of the present invention to provide nuclear power plant including such a reactor containment vessel cooling equipment.

According to an aspect of the present invention, there is provided a nuclear reactor containment vessel cooling equipment for suppressing internal pressure of a nuclear reactor containment vessel containing a nuclear reactor pressure vessel, the equipment comprising: a dry well cooler casing arranged in the nuclear reactor containment vessel and having an opening at top surface thereof and a shutter at a lower part thereof; a heat transfer tube arranged at an upper part of the dry well cooler casing to allow cooling water to pass through inside thereof; a forced cooling water circulation system for feeding cooling water from outside of the nuclear reactor containment vessel into the heat transfer tube by means of a pump; a blower for mobilizing gas around the heat transfer tube both inside and outside of the dry well cooler casing; an external pool container arranged outside the nuclear reactor containment vessel and above the heat transfer tube and containing cooling water; and a gravity-driven cooling system adapted to supply cooling water contained in the external pool container into the heat transfer tube, utilizing gravity as drive force.

According to another aspect of the present invention, there is provided a nuclear reactor containment vessel cooling equipment for suppressing internal pressure of a nuclear reactor containment vessel containing a nuclear reactor pressure vessel, the equipment comprising: a dry well cooler casing arranged in the nuclear reactor containment vessel and having an opening; a heat transfer tube arranged in the dry well cooler casing and including a sloped heat transfer tube to allow cooling water to pass through inside thereof; a forced cooling water circulation system for feeding cooling water from outside of the nuclear reactor containment vessel into the heat transfer tube by a pump; a blower for mobilizing gas around the heat transfer tube both inside and outside of the dry well cooler casing; an external pool container arranged outside the nuclear reactor containment vessel and above the heat transfer tube and containing cooling water; and a gravity-driven cooling system adapted to supply cooling water contained in the external pool container into the heat transfer tube, utilizing gravity as drive force.

According to yet another aspect of the present invention, there is provided a nuclear reactor containment vessel cooling equipment for suppressing internal pressure of a nuclear reactor containment vessel containing a nuclear reactor pressure vessel, the equipment comprising: a heat transfer tube arranged in the nuclear reactor containment vessel to allow cooling water to pass through inside thereof; a forced cooling water circulation system for feeding cooling water from outside of the nuclear reactor containment vessel into the heat transfer tube by a pump; an external pool container arranged outside the nuclear reactor containment vessel and above the heat transfer tube and containing cooling water; a gravity-driven cooling system adapted to supply cooling water contained in the external pool container into the heat transfer tube, utilizing gravity as drive force; and at least one three-way valve for selectively connecting the heat transfer tube to either the forced cooling water circulation system or the gravity-driven cooling system.

According to yet another aspect of the present invention, there is provided a nuclear reactor containment vessel cooling equipment for suppressing internal pressure of a nuclear reactor containment vessel containing a nuclear reactor pressure vessel, the equipment comprising: a dry well cooler casing arranged in the nuclear reactor containment vessel and having an opening; a heat transfer tube arranged outside the dry well cooler casing in the nuclear reactor containment vessel to allow cooling water to pass through inside thereof; a forced cooling water circulation system for feeding cooling water from outside of the nuclear reactor containment vessel into the heat transfer tube by a pump; a blower for mobilizing gas around the heat transfer tube by causing it to pass through the dry well cooler casing by way of the opening; an external pool container arranged outside the nuclear reactor containment vessel and above the heat transfer tube and containing cooling water; and a gravity-driven cooling system adapted to supply cooling water contained in the external pool container into the heat transfer tube, utilizing gravity as drive force.

According to yet another aspect of the present invention, there is provided a nuclear reactor containment vessel cooling equipment for suppressing internal pressure of a nuclear reactor containment vessel containing a nuclear reactor pressure vessel, the equipment comprising: a heat transfer tube arranged in the nuclear reactor containment vessel to allow cooling water to pass through inside thereof; a forced cooling water circulation system for feeding cooling water from outside of the nuclear reactor containment vessel into the heat transfer tube by a pump; an external pool container arranged outside the nuclear reactor containment vessel and above the heat transfer tube and containing cooling water so as to make the water surface substantially at same level with the heat transfer tube; and a gravity-driven cooling system adapted to supply cooling water contained in the external pool container into the heat transfer tube, utilizing gravity as drive force.

According to yet another aspect of the present invention, there is provided a nuclear reactor containment vessel cooling equipment for suppressing internal pressure of a nuclear reactor containment vessel containing a nuclear reactor pressure vessel, the equipment comprising: a heat transfer tube arranged in the nuclear reactor containment vessel to allow cooling water to pass through inside thereof; a forced cooling water circulation system for feeding cooling water from outside of the nuclear reactor containment vessel into the heat transfer tube by a pump; an external pool container arranged outside the nuclear reactor containment vessel and above the heat transfer tube and containing cooling water; a gravity-driven cooling system adapted to supply cooling water contained in the external pool container into the heat transfer tube, utilizing gravity as drive force; and at least one valve for selectively connecting either the forced cooling water circuit system or the gravity-driven cooling system, the valve being adapted to be automatically switched according to a change in internal pressure of the nuclear reactor containment vessel.

According to yet another aspect of the present invention, there is provided a nuclear reactor containment vessel cooling equipment for suppressing internal pressure of a nuclear reactor containment vessel containing a nuclear reactor pressure vessel, the equipment comprising: a dry well cooler casing arranged in the nuclear reactor containment vessel and having an opening; a heat transfer tube arranged in the dry well cooler casing to allow cooling water to pass through inside thereof; a forced cooling water circulation system for feeding cooling water from outside of the nuclear reactor containment vessel into the heat transfer tube by a pump; an external pool container arranged outside the nuclear reactor containment vessel and above the heat transfer tube and containing cooling water; a tank arranged outside the nuclear reactor containment vessel to contain cooling water; a jet pump arranged in the external pool container to drive cooling water from inside of the external pool container and the tank toward the heat transfer tube; a steam injector for driving cooling water from inside of the tank as drive water of the jet pump; steam piping for leading steam led from the heat transfer tube to the external pool container to the steam injector as drive steam of the steam injector; water piping for leading cooling water from the inside of the tank to the steam injector; and ejection piping for leading cooling water ejected from the steam injector as drive water of the jet pump.

According to yet another aspect of the present invention, there is provided a nuclear reactor containment vessel cooling equipment for suppressing internal pressure of a nuclear reactor containment vessel containing a nuclear reactor pressure vessel, the equipment comprising: a heat transfer tube arranged in the nuclear reactor containment vessel to allow cooling water to pass through inside thereof; a forced cooling water circulation system for feeding cooling water from outside of the nuclear reactor containment vessel into the heat transfer tube by a pump; an external pool container arranged outside the nuclear reactor containment vessel and above the heat transfer tube and containing cooling water; a gravity-driven cooling system adapted to supply cooling water contained in the external pool container into the heat transfer tube, utilizing gravity as drive force; and at least one valve for selectively connecting the heat transfer tube to either the forced cooling water circulation system or the gravity-driven cooling system; wherein the gravity-driven cooling system includes: a first piping connected at an end thereof to a lower part of the heat transfer tube and having other end thereof opened under water surface in the external pool container; and a second piping connected at an end thereof to an upper part of the heat transfer tube and having other end thereof opened above the water surface in the external pool container.

According to yet another aspect of the present invention, there is provided a nuclear reactor containment vessel cooling equipment for suppressing internal pressure of a nuclear reactor containment vessel containing a nuclear reactor pressure vessel, the equipment comprising: a heat transfer tube arranged in the nuclear reactor containment vessel to allow cooling water to pass through inside thereof; a forced cooling water circulation system for feeding cooling water from outside of the nuclear reactor containment vessel into the heat transfer tube by a pump; an external pool container arranged outside the nuclear reactor containment vessel and above the heat transfer tube and containing cooling water; a gravity-driven cooling system adapted to supply cooling water contained in the external pool container into the heat transfer tube, utilizing gravity as drive force; and at least one valve for selectively connecting the heat transfer tube to either the forced cooling water circulation system or the gravity-driven cooling system; wherein: the gravity-driven cooling system includes: a first piping connected at an end thereof to a lower part of the heat transfer tube and having other end thereof opened in the cooling water in the external pool container; and a second piping connected at an end thereof to an upper part of the heat transfer tube and having other end thereof opened above the opening of the first piping in the external pool container; and an insulating material is provided to surround at least part of the first piping in the nuclear reactor containment vessel.

According to yet another aspect of the.present invention, there is provided a nuclear reactor containment vessel cooling equipment for suppressing internal pressure of a nuclear reactor containment vessel containing a nuclear reactor pressure vessel, the equipment comprising: a heat transfer tube arranged in the nuclear reactor containment vessel to allow cooling water to pass through inside thereof; a forced cooling water circulation system for feeding cooling water from outside of the nuclear reactor containment vessel into the heat transfer tube by a pump; an external pool container arranged outside the nuclear reactor containment vessel and above the heat transfer tube and containing cooling water; a gravity-driven cooling system adapted to supply cooling water contained in the external pool container into the heat transfer tube, utilizing gravity as drive force; and at least one valve for selectively connecting the heat transfer tube to either the forced cooling water circulation system or the gravity-driven cooling system; wherein: the gravity-driven cooling system includes: a first piping connected at an end thereof to a lower part of the heat transfer tube and having other end thereof opened in the cooling water in the external pool container; and a second piping connected at an end thereof to an upper part of the heat transfer tube and having other end thereof opened above the opening of the first piping in the external pool container; and an insulating material is provided to surround at least part of the second piping in the cooling water in the external pool container.

### BRIEF DESCRIPTION OF THE DRAWINGS

The above and other features and advantages of the present invention will become apparent from the discussion hereinbelow of specific, illustrative embodiments thereof presented in conjunction with the accompanying drawings, in which:
FIG. 1 is a schematic elevational cross sectional view of Embodiment 1 of nuclear reactor containment vessel cooling equipment according to the present invention;
FIG. 2 is a schematic perspective view of the dry well cooler in FIG. 1;
FIG. 3 is a schematic cross sectional elevation of one of the heat transfer tubes in FIG. 2;
FIG. 4 is a schematic elevational cross sectional view of Embodiment 2 of nuclear reactor containment vessel cooling equipment according to the present invention;
FIG. 5 is a schematic elevational cross sectional view of one of the dry well coolers of Embodiment 3 of nuclear reactor containment vessel cooling equipment according to the present invention;
FIG. 6 is a schematic elevational cross sectional view of Embodiment 4 of nuclear reactor containment vessel cooling equipment according to the present invention;
FIG. 7 is a schematic elevational cross sectional view of Embodiment 5 of nuclear reactor containment vessel cooling equipment according to the present invention;
FIG. 8 is a schematic elevational cross sectional view of a valve of FIG. 7, illustrating the structure thereof;
FIG. 9 is a schematic elevational cross sectional view of Embodiment 6 of nuclear reactor containment vessel cooling equipment according to the present invention;
FIG. 10 is a schematic elevational cross sectional view of Embodiment 7 of nuclear reactor containment vessel cooling equipment according to the present invention;
FIG. 11 is a schematic elevational cross sectional view of Embodiment 8 of nuclear reactor containment vessel cooling equipment according to the present invention; and
FIG. 12 is a schematic elevational cross sectional view of Embodiment 9 of nuclear reactor containment vessel cooling equipment according to the present invention.

### DETAILED DESCRIPTION OF THE PREFERRED

### EMBODIMENTS

Now, the present invention will be described in greater detail by referring to the accompanying drawings that illustrate preferred embodiments of the invention. Throughout the drawings, the same or similar parts are commonly denoted by same reference symbols and will not be described repeatedly.

### [Embodiment 1]

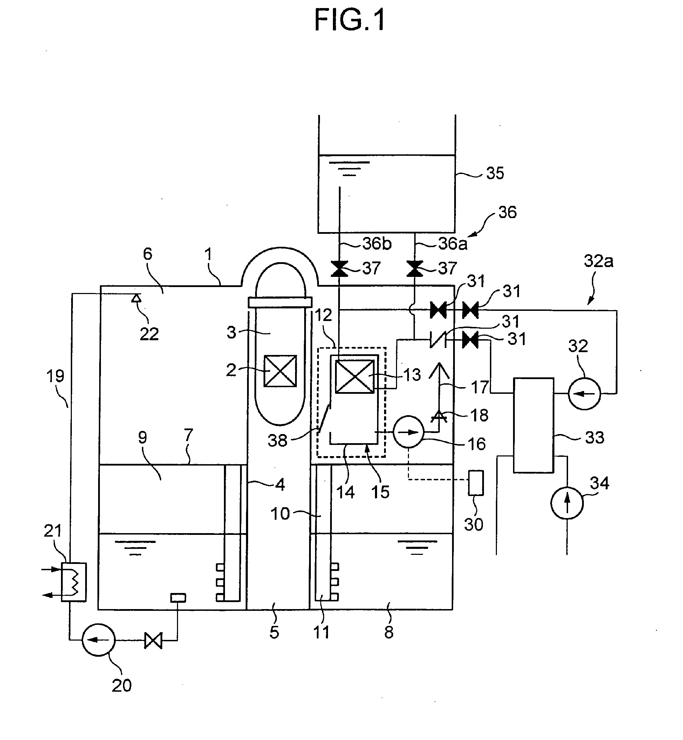

Firstly, the overall configuration of nuclear reactor containment vessel cooling equipment according to the invention will be summarily described by referring to FIGs. 1 through 3. FIG. 1 is a schematic elevational cross sectional view of Embodiment 1 of nuclear reactor containment vessel cooling equipment according to the present invention. As shown in FIG. 1, a nuclear reactor pressure vessel 3 is supported by a pedestal 4 in a nuclear reactor containment vessel 1. A reactor core 2 that holds nuclear fuel is contained in the nuclear reactor pressure vessel 3.

A lower dry well 5 surrounded by the pedestal 4, an upper dry well 6 surrounding the nuclear reactor pressure vessel 3 and a pressure suppression chamber 9 arranged under the upper dry well 6 and separated from the latter by a diaphragm floor 7 are arranged in the nuclear reactor containment vessel 1. The pressure suppression chamber 9 has a pressure suppression pool 8 in the inside thereof.

The upper dry well 6 and the lower dry well 5 are held in communication with each other through communication ports 10. The two dry wells 5, 6 and the pressure suppression chamber 9 are linked to each other by way of vent pipes 11 that extend into the water in the pressure suppression pool 8. A number of dry well coolers 12 are arranged in the inside of the nuclear reactor containment vessel 1 in order to maintain the internal atmosphere of the dry wells 5, 6 in a specified cooled condition while the nuclear reactor is in normal operation.

Each of the dry well coolers 12 has a dry well cooling unit 15 and a blower 16 that is a gas circulation means. The dry well cooling unit 15 includes a casing 14 and a cooling coil (or a heat transfer tube) 13 contained in the casing 14.

In normal operation of the nuclear reactor, cooling water is made to flow through the internal piping of the cooling coil 13 by means of a forced cooling water circulation system 32a, and gas is led from the inside of the upper and lower dry wells 5, 6 into the casing 14. More specifically, the internal pressure of the casing 14 is reduced by means of the blower 16 to produce a pressure difference between the inside and the outside of the casing 14, which pressure difference by turn gives rise to a gas flow. The gas led into the casing 14 is cooled as it is made to pass through the area surrounding the piping of the cooling coil 13. The cooled gas is blown into and circulates through different parts of the upper and lower dry wells 5, 6 by way of a damper 18.

A cooling system is provided so as to lead cooling water from the pressure suppression pool 8 by means of residual heat removal pump 20 of residual heat removal system line 19 for exchanging heat at residual heat removal heat exchanger 21 and subsequently being sprayed into the upper dry well 6 from a spray header 22 in order to cool the inside of the upper dry well 6. This cooling system is so designed as to be used for cooling the containment vessel 1 in a high temperature and high pressure condition.

In this embodiment, a gravity-driven cooling system 36 is provided in addition to the forced cooling water circulation system 32a as a system for supplying cooling water into the internal piping of the cooling coil 13 and the two cooling systems are switched from one to the other by means of valves 31, 37. More specifically, an external pool container 35 is arranged outside and above the nuclear reactor containment vessel 1 so as to contain cooling water in the inside. Thus, the cooling water is supplied from the inside of the external pool container 35 into the cooling coil 13 without any pumps, utilizing gravity as drive force.

The forced cooling water circulation system 32a comprises a cooling water pump 32 and a heat exchanger 33 arranged outside the nuclear reactor containment vessel 1 so that cooling water cooled by the heat exchanger 33 is fed to the cooling coil 13 in the dry well cooling unit 15 by the cooling water pump 32 to circulate. Additionally, a cooling water pump 34 is provided to typically circulate sea water in order to cool the cooling water of the forced cooling water circulation system 32a by means of the heat exchanger 33. Valves 31 are arranged at the outside and the inside of the part of the wall of the nuclear reactor containment vessel 1 where the forced cooling water circulation system 32a runs through the wall. While a check valve is arranged as one of the valves 31, it may be replaced by a valve same as the other valves.

The blower 16 mobilizes the gas surrounding the cooling coil 13 in the dry well cooling unit 15 to accelerate the cooling coil 13 cooling the gas in the nuclear reactor containment vessel 1. The valves 31 are opened while the nuclear reactor is in normal operation. However, once there arises a loss-of-coolant accident and the water level in the nuclear reactor pressure vessel 3 falls or the pressure in the nuclear reactor containment vessel 1 rises, they are closed to isolate the nuclear reactor containment vessel 1.

The gravity-driven cooling system 36 includes a first piping 36a and a second piping 36b that are branched from the forced cooling water circulation system 32a and connected to the external pool container 35 arranged above the nuclear reactor containment vessel 1. The first piping 36a links a bottom part of the external pool container 35 and a bottom part of the cooling coil 13, while the second piping 36b links a top part of the external pool container 35 and a top part of the cooling coil 13. The first piping 36a and the second piping 36b are provided respectively with valves 37 that are located outside the nuclear reactor containment vessel 1 and away from the parts thereof running through the nuclear reactor containment vessel 1.

The valves 37 are closed while the nuclear reactor is in normal operation. However, once the amount of cooling water to be supplied to the cooling coil 13 falls below a threshold value, they are automatically or manually opened so as to supply cooling water from the external pool container 35 to the cooling coil 13. Alternatively, it may be so arranged that the valves 37 are opened automatically or manually when the temperature of the cooling water returning from the cooling coil 13 rises above a predetermined temperature level. The power source for driving the valves 37 for opening them when all the AC power supply of the nuclear power plant is lost should be separated from the power source for driving and the blower 16 and the cooling water pump 32. For example, an emergency DC power source may be provided for the valves 37.

The external pool container 35 may be, for example, an equipment pool that is normally used for a boiling water nuclear power plant. Such an ordinary equipment pool does not contain water when the nuclear power plant is in normal operation but filled with water for periodical inspections so that intra-reactor structures may be temporarily placed there. However, such an equipment pool may be filled with water even when the nuclear power plant is in normal operation so as to make itself ready for a situation where all the power supply is lost.

When an accident occurs and/or the power supply is lost in the system having the above described configuration, the valves 31 at the side of the forced cooling water circulation system 32a are closed. Then, cooling water is no longer supplied by driving the cooling water pump 32, but the cooling water stored in the external pool container 35 is supplied to the cooling coil 13 by way of the gravity-driven cooling system 36. In such a situation, the density of the cooling water in the cooling coil 13 is relatively reduced because the temperature rises in the cooling coil 13 and steam is generated, which causes buoyancy. Thus, the cooling water rises in the cooling coil 13 and then through the second piping 36b to get to an upper part of the external pool container 35. At the same time, relatively cold cooling water is supplied from the bottom of the external pool container 35 to near the bottom of the cooling coil by way of the first piping 36a. As natural circulation is established in this way, cooling water is supplied to the cooling coil 13 for a long period of time.

In this embodiment, the cooling coil 13 of the dry well cooling unit 15 is arranged at an upper part in the inside of the dry well cooling unit 15 and provided with an opening for leading fluid in the space of the dry well from the top surface thereof and a shutter plate 38 at a lower part of the dry well cooling unit 15 as shutter means. The shutter plate 38 is closed while the nuclear reactor is in normal operation but opened in the event of a loss-of-coolant accident or in some other emergency situation.

In the event of a loss-of-coolant accident or in some other emergency situation, steam is condensed by the cooling coil 13 in the dry well cooling unit 15 of each of the dry well coolers 12. However, since an opening is provided at a lateral side in order to lead fluid in the space of the dry well, the nitrogen gas that is initially sealed in the nuclear reactor containment vessel 1 and the non-condensable gas such as hydrogen gas produced as a result of a rise of temperature and pressure gradually accumulate in the dry well cooling unit 15 with time. In other words, such gases accumulate in part of the cooling coil 13 with the conventional techniques as disclosed on the above-cited Japanese Patent Application Laid-Open Publication No. 2001-215291. Additionally, in such a situation, the ordinary power supply 30 is automatically suspended as precautionary measure so that many pieces of equipment including the blower 16 are stopped and become no longer operational. Thus, it is not possible to exhaust the non-condensable gas accumulated in the dry well cooling unit 15.

However, with this embodiment, since an opening is arranged at the top surface of the dry well cooling unit 15 of each of the dry well coolers 12 for leading fluid in the space of the dry well, the steam cooled by the cooling coil 13 is condensed and the cooled non-condensable gas moves downward in the dry well cooling unit 15 due to the difference of density. Additionally, as the shutter plate 38 at a lower part of the dry well cooling unit 15 is opened, the non-condensable gas in the dry well cooling unit 15 is driven to flow back into the space of the dry well. Thus, the non-condensable gas in the cooling oil 13 is exhausted in an accelerated manner.

Then, as a result, the partial pressure of the non-condensable gas in the dry well cooling unit falls and the partial pressure of the non-condensable gas lingering around the cooling coil 13 also falls to maintain the heat removing performance of the cooling coil 13. Thus, it is possible to suppress the rise of internal pressure of the nuclear reactor containment vessel 1.

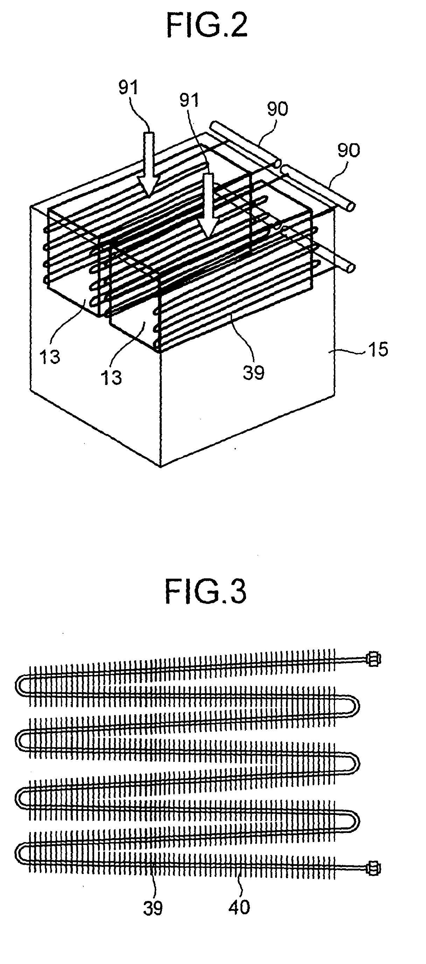

FIG. 2 is a schematic perspective view of the dry well cooler 12 in FIG. 1, showing a principal part thereof. As shown in FIG. 2, the cooling coil 13 that is arranged at an upper part of the inside of the dry well cooling unit 15 of each of the dry well coolers 12 as one of the pressure suppression devices in the nuclear reactor containment vessel 1 is formed by a plurality of meandering heat transfer tubes 39 that are arranged in a vertical direction. In FIG. 2, reference numeral 90 denotes a cooling water header for distributing and collecting cooling water flowing in the heat transfer tubes 39.

With the above described arrangement, the cooling water in the cooling coil 13 exchanges heat with the gas in the dry well (the gas flow being indicated by arrows 91 in FIG. 2) to raise its temperature and reduce its density. The density of the cooling water is further reduced when steam voids are produced as a result of boiling. Then, as a result, there arises an upward flow of cooling water in the cooling coil 13 to dissolve the instability in terms of flowing direction.

FIG. 3 is a schematic cross sectional elevation of one of the heat transfer tubes in FIG. 2. As shown in FIG. 3, the straight parts of the heat transfer tube 39 that is meandering in a vertical direction are inclined. Additionally, the heat transfer tube 39 is provided at the outside thereof with fins 40 to accelerate the transfer and exchange of heat with the gas in the dry well.

### [Embodiment 2]

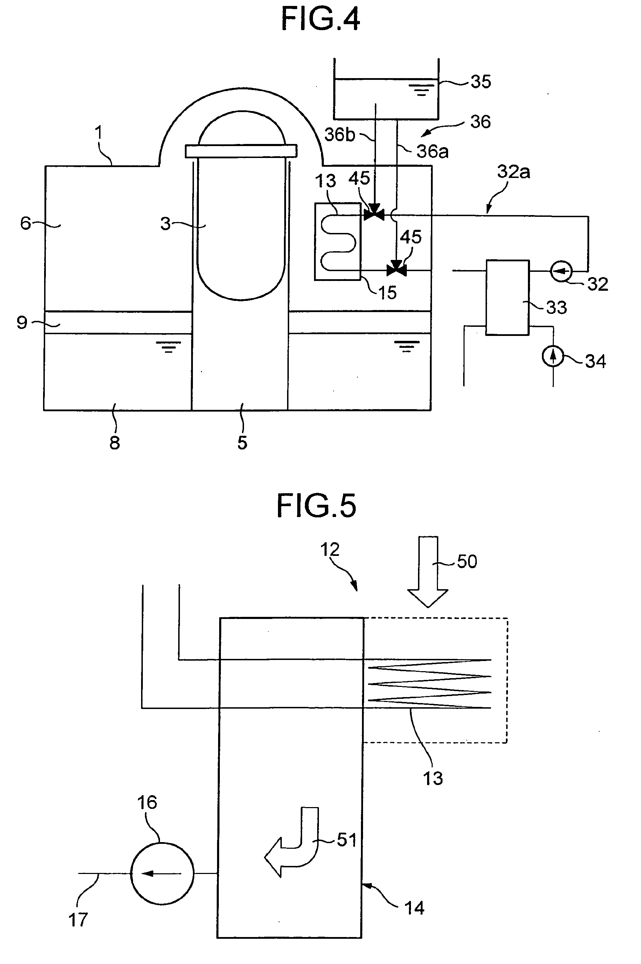

Now, Embodiment 2 of the present invention will be described below by referring to FIG. 4. The forced cooling water circulation system 32a that is activated in normal plant operation and the gravity-driven cooling system 36 that is operated in the event of a loss-of-coolant accident are provided as cooling systems for supplying cooling water to the dry well cooling unit 15. With this embodiment, the valves 31 and 37 shown in FIG. 1 are replaced by two three-way valves 45 that are arranged in the nuclear reactor containment vessel 1.

With this arrangement, it is possible to reduce the number of valves that operate as means for switching the forced cooling water circulation system 32a and the gravity-driven cooling system 36.

### [Embodiment 3]

Now, Embodiment 3 of the present invention will be described below by referring to FIG. 5. With this embodiment, the cooling coils 13 of dry well coolers 12 are arranged outside the dry well cooling casing 14.

With this arrangement, in normal operation, the gas in the dry well is sucked from an upper part of the casing 14 as indicated by arrows 50 and 51, and returned into the dry well by way of the dry well cooler casing 14, a blower 16 and a duct 17. Before the gas enters the dry well cooler casing 14 by way of aperture thereof, it passes through the area surrounding the heat transfer coil 13 and becomes cooled there.

On the other hand, when an accident occurs, the power supply is suspended and the blower 16 becomes no longer operational but the condensed water produced by the cooling coil 13 falls outside the dry well cooler casing 14. Additionally, since the cooling coil 13 is arranged outside the dry well cooler casing 14, gas contained in steam does not accumulate in the drywell cooler casing 14.

### [Embodiment 4]

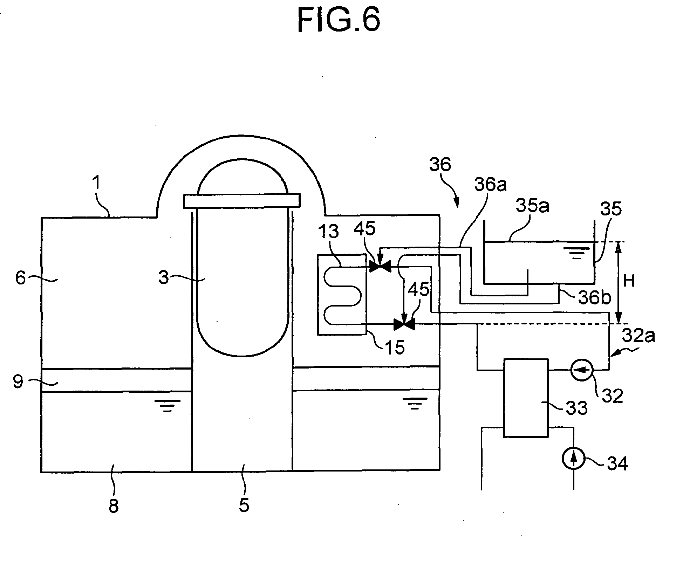

Now, Embodiment 4 of the present invention will be described below by referring to FIG. 6. With this embodiment, the external pool container 35 is arranged not above but at a lateral side of the nuclear reactor containment vessel 1. Thus, the water surface 35a of cooling water in the external pool container 35 is substantially at the same level with the cooling coil 13 of the dry well cooling unit 15 or with the top of the nuclear reactor pressure vessel 3. Otherwise, this embodiment is identical with Embodiment 1 or Embodiment 2. In FIG. 6, the three-way valves 45 are arranged as means for switching the forced cooling water circulation system 32a and the gravity-driven cooling system 36, as in Embodiment 2 shown in FIG. 4.

With this embodiment, the difference of water head H of the flow path through which water used for cooling the dry well cooling unit 15 can be reduced if compared with the external pool container 35 arranged above the nuclear reactor containment vessel 1. As the difference of water head H is reduced, the pressure difference in the flow path is also reduced. Thus, it is possible to suppress boiling of water used for cooling the nuclear reactor containment vessel 1 due to the pressure reduction caused by the pressure difference in the flow path.

### [Embodiment 5]

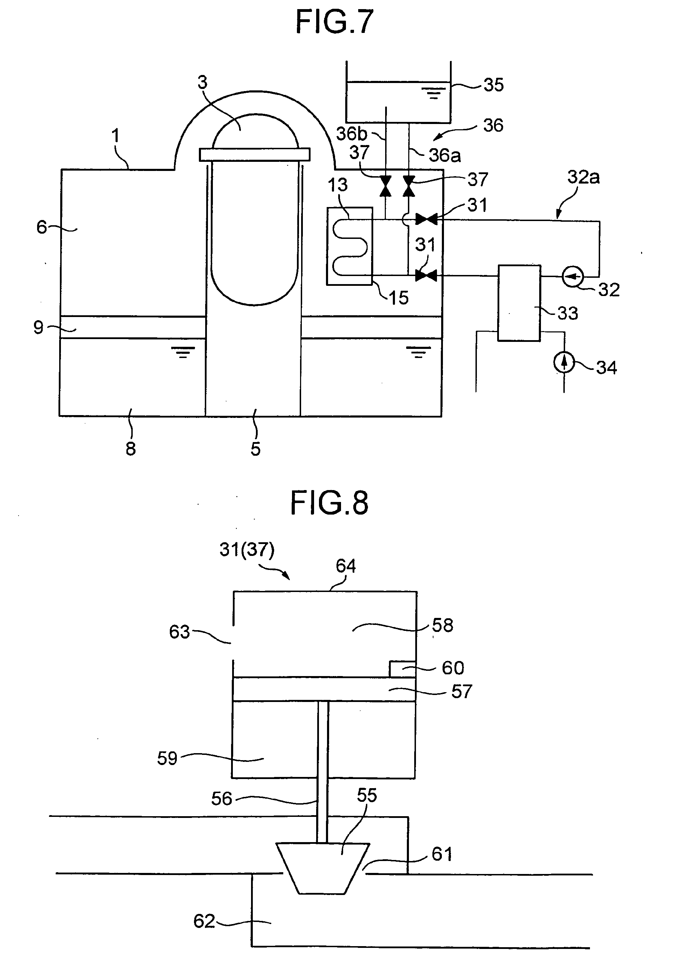

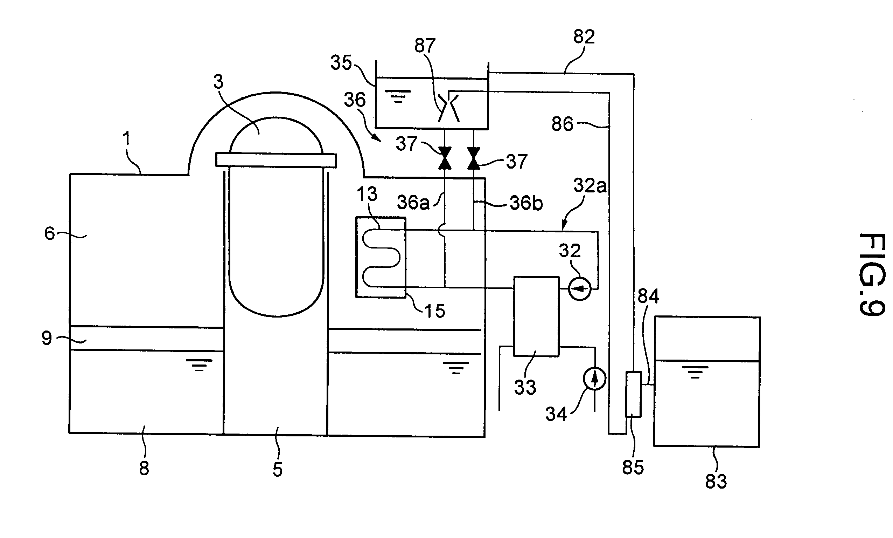

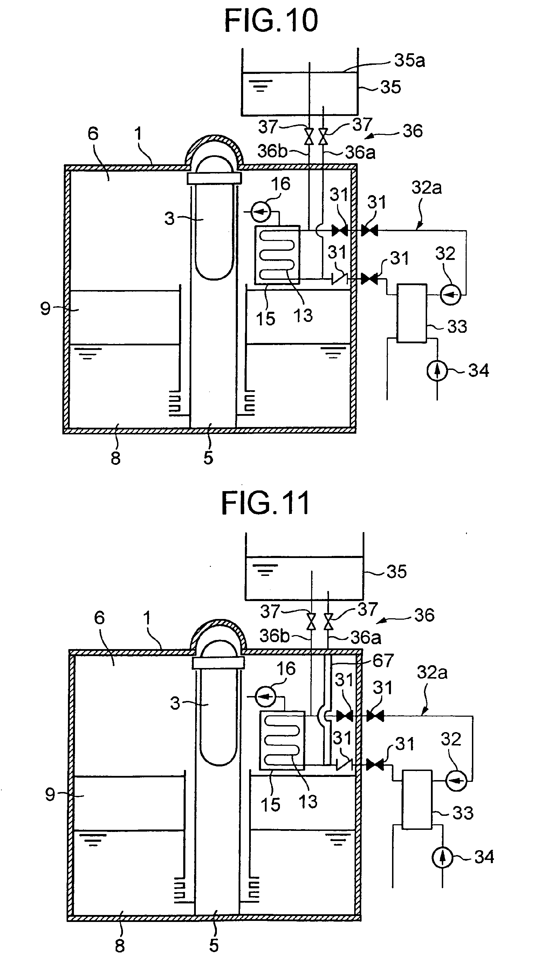

Now, Embodiment 5 of the present invention will be described below by referring to FIGs. 7 and 8. The forced cooling water circulation system 32a that is operated in normal plant operation and the gravity-driven cooling system 36 that is operated in the event of a loss-of-coolant accident are provided as cooling systems for supplying cooling water to the dry well cooling unit 15. With this embodiment, the two valves 31 provided at the side of the forced cooling water circulation system 32a and the two valves provided at the side of the gravity-driven cooling system 36 that operate as means for switching the forced cooling water circulation system 32a and the gravity-driven cooling system 36 are arranged in the nuclear reactor containment vessel 1.

The valves 31 and 37 are adapted to be automatically opened and closed according to the internal pressure of the nuclear reactor containment vessel 1. The valves 31 at the side of the forced cooling water circulation system 32a are opened and the valves 37 at the side of the gravity-driven cooling system 36 are closed to remove heat from the inside of the nuclear reactor containment vessel 1 by means of the forced cooling water circulation system 32a when the internal pressure of the nuclear reactor containment vessel 1 is lower than a predetermined pressure level. On the other hand, the valves 31 at the side of the forced cooling water circulation system 32a are closed and the valves 37 at the side of the gravity-driven cooling system 36 are opened to remove heat from the inside of the nuclear reactor containment vessel 1 by means of the gravity-driven cooling system 36 when the internal pressure of the nuclear reactor containment vessel 1 is higher than the predetermined pressure level.

Alternatively, it may be so arranged that only the valves 31 at the side of the forced cooling water circulation system 32a are opened when the internal pressure of the nuclear reactor containment vessel 1 is higher then a predetermined pressure level, whereas only the valves 37 at the side of the gravity-driven cooling system 36 are opened when the internal pressure of the nuclear reactor containment vessel 1 is lower than the predetermined pressure level.

FIG. 8 is a schematic elevational cross sectional view of the valve 31 (37) that is automatically opened or closed according to the internal pressure of the nuclear reactor containment vessel 1 as described above, illustrating the structure thereof. The valve of the illustrated instance is structurally so adapted as to be closed when the internal pressure of the nuclear reactor containment vessel 1 becomes higher than a predetermined pressure level. The valve is formed by fitting a valve rod 56 to a valve body 55 that can vertically reciprocate and a piston 57 is fitted to the top end of the valve rod 56. The piston 57 can vertically reciprocate in a cylinder 64. The inside of the cylinder 64 is separated into an upper space 58 and a lower space 59 by the piston 57. The upper space 58 of the cylinder 64 is provided with an opening 63. A stopper 60 is rigidly secured in the cylinder 64 so that the piston 57 cannot go above the stopper 60.

The valve body 55 shows a profile of an inverted frustum of cone. When the piston 57 abuts the stopper 60 at its top position as shown in FIG. 8, the valve body 55 is moved away from the valve seat 61 and the valve is opened to make the flow path 62 communicable. As the internal pressure of the nuclear reactor containment vessel 1 rises outside the cylinder 64 in the condition of FIG. 8, gas flows from the inside of the nuclear reactor containment vessel 1 into the upper space 58 by way of the opening 63 to raise the internal pressure of the upper space 58 and push down the piston 57. As a result, the gas in the lower space 59 is compressed to push down the valve rod 56 and the valve body 55. Since the valve body 55 has a profile of a frustum of cone with its diameter greater in the upper part than in the lower part thereof, the gap between the valve body 55 and the valve seat 61 is reduced as the valve body 55 is lowered. Thus, the gap between the valve body 55 and the valve seat 61 becomes non-existent to close the valve when the internal pressure of the nuclear reactor containment vessel 1 becomes higher than a predetermined pressure level.

When the internal pressure of the nuclear reactor containment vessel 1 is further lowered outside the cylinder 64 from the condition illustrated in FIG. 8, the piston 57 is subjected to force trying to push it up due to the internal pressure of the lower space 59 but the piston 57 cannot move upward any further because the stopper 60 is there.

The structure of the valve of FIG. 8 may be modified in such a way that the opening 63 is provided not at the upper space 58 but at the lower space 59 to open and close the valve the other way. Then, the piston 57 is pushed up to open the valve as the internal pressure of the nuclear reactor containment vessel 1 rises.

Thus, with this embodiment, it is possible to switch the operation mode by utilizing a rise of the internal pressure of the nuclear reactor containment vessel 1.

### [Embodiment 6]

Now, Embodiment 6 of the present invention will be described below by referring to FIG. 9. Steam injectors are generally a type of static pumps that provide high ejection pressure simply by supplying steam and water. Containment vessel cooling equipment of FIG. 9 comprises steam supply piping 82 for supplying part of the steam generated in the external pool container 35 that is under the atmospheric pressure to a steam injector 85. The cooling equipment also comprises water supply piping 84 for supplying water from a ground water tank 83, and the steam injector 85 driven by the steam and the water supplied to it. The cooling equipment further comprises ejection piping 86 for returning the water ejected from the steam injector 85 to the external pool container 35, and a jet pump 87 arranged at the exit section of the ejection piping 86. The outlet of the jet pump 87 is directed downward toward the first piping 36a.

The steam injector 85 starts operating when part of the steam that is generated in the external pool container 35 at atmospheric pressure fills the steam supply piping 82 and water is supplied from the ground water tank 83. Once the steam injector 85 starts operating, the internal pressure of the steam injector 85 falls to put the inside thereof under negative pressure due to condensation of steam so that the steam injector 85 sucks steam further to stably keep on operating. Then, the jet pump 87 is driven to operate by the water ejected from the steam injector 85 so that water is fed from the inside of the external pool container 85 to the cooling coil 13 by way of the first piping 36a to establish forced circulation of water.

Thus, with this embodiment, it is possible to raise the rate of natural circulation of cooling water for cooling the dry well cooling unit 15 without requiring any operation by an operator owing to the static equipment including the steam injector 85 and the jet pump 87. Additionally, as the steam generated by the steam injector 85 is condensed and poured back into the external pool container 35, it is possible to prevent the water level in the external pool container 35 from lowering.

### [Embodiment 7]

Now, Embodiment 7 of the present invention will be described below by referring to FIG. 10. This embodiment is realized by modifying Embodiment 1. In Embodiment 7, the top end of the second piping 36b of the gravity-driven cooling system is projecting from the water surface 35a of the cooling water in the external pool container 35. Otherwise, this embodiment is same and identical with Embodiment 1.

With this embodiment having the above described configuration, the cooling water that is heated as a result of the heat exchange with the gas in the upper dry well 6 and upwardly flowing in the cooling coil 13 flows out into the space above the water surface 35a of the external pool container 35 without being subjected to the downwardly directed gravity by the cooling water in the external pool container 35 when it is directed upward by way of the second piping 36b. Then, as a result, the effect of blocking the natural circulation between the external pool container 35 and the cooling coil 15 is reduced to raise the flow rate and also the rate at which heat is removed from the nuclear reactor containment vessel 1.

### [Embodiment 8]

Now, Embodiment 8 of the present invention will be described below by referring to FIG. 11. With this embodiment, the part of the first piping 36a that is arranged in the upper dry well 6 is covered by an insulating material 67, whereas the second piping 36b is not provided with any insulating material. The cooling water flows from the external pool container 35 through the first piping 36a. Otherwise, this embodiment is same and identical with Embodiment 1.

With this embodiment having the above described configuration, it is possible to reduce the heat exchange that takes place between the cooling water from the external pool container 35 and the gas in the upper dry well 6 when the cooling water falls from the external pool container 35 through the first piping 36a. Thus, the temperature rise of cooling water, which tends to block the cooling water trying to flow down, is suppressed. Additionally, as the second piping 36b is not provided with any insulating material, the temperature of cooling water that is raised as the cooling water passes through the cooling coil 15 is raised further due to the heat exchange with the gas in the upper dry well 6 to accelerate the upwardly directed flow. Thus, this arrangement provides an effect of increasing the rate of natural circulation of water between the external pool container 35 and the cooling coil 15 so that it is possible to raise the rate at which heat is removed from the nuclear reactor containment vessel.

### [Embodiment 9]

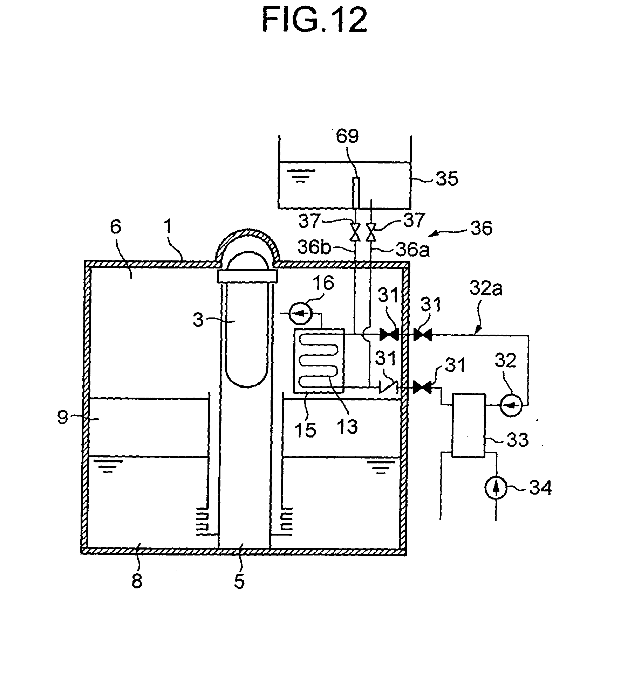

Now, Embodiment 9 of nuclear reactor containment vessel cooling equipment according to the present invention will be described blow by referring to FIG. 12. With this embodiment, the part of the second piping 36b that is immersed in the cooling water in an external pool container 35 is covered by an insulating material 69.

With this embodiment having the above described configuration, the cooling water flowing upward through the second piping 36b and into the external pool container 35 flows out from the second piping 36b without being cooled by the water in the external pool container 35 that surrounds the insulating material 69. Then, it is possible to suppress the temperature fall of cooling water that tends to block the cooling water trying to flow up through the second piping 36b. Thus, this embodiment provides an advantage of raising the rate of natural circulation of water between the external pool container 35 and the cooling coil 15, so that it is possible to raise the rate at which heat is removed from the nuclear reactor containment vessel.

### [Other Embodiments]

The embodiments of the nuclear reactor containment vessel cooling equipment in accordance with the present invention explained above are merely examples, and the present invention is not restricted thereto. It is, therefore, to be understood that, within the scope of the appended claims, the present invention can be practiced in a manner other than as specifically described herein. For example, various features of the above-described embodiments can be combined in various ways.

## Claims

1. A nuclear reactor containment vessel cooling equipment for suppressing internal pressure of a nuclear reactor containment vessel (1) containing a nuclear reactor pressure vessel (3), the equipment comprising:
a dry well cooler casing (14) arranged in the nuclear reactor containment vessel (1) and having an opening at top surface thereof and a shutter (38) at a lower part thereof;
a heat transfer tube (13) arranged at an upper part of the dry well cooler casing (14) to allow cooling water to pass through inside thereof;
a forced cooling water circulation system (32a) for feeding cooling water from outside of the nuclear reactor containment vessel (1) into the heat transfer tube (13) by a pump (32);
a blower (16) for mobilizing gas around the heat transfer tube (13) both inside and outside of the dry well cooler casing (14);
an external pool container (35) arranged outside the nuclear reactor containment vessel (1) and above the heat transfer tube (13) and containing cooling water; and
a gravity-driven cooling system (36) adapted to supply cooling water contained in the external pool container (35) into the heat transfer tube (13), utilizing gravity as drive force.

2. A nuclear reactor containment vessel cooling equipment for suppressing internal pressure of a nuclear reactor containment vessel (1) containing a nuclear reactor pressure vessel (3), the equipment comprising:
a dry well cooler casing (14) arranged in the nuclear reactor containment vessel (1) and having an opening;
a heat transfer tube (13) arranged in the dry well cooler casing (14) and including a sloped heat transfer tube (39) to allow cooling water to pass through inside thereof;
a forced cooling water circulation system (32a) for feeding cooling water from outside of the nuclear reactor containment vessel (1) into the heat transfer tube (13) by a pump (32);
a blower (16) for mobilizing gas around the heat transfer tube (13) both inside and outside of the dry well cooler casing (14);
an external pool container (35) arranged outside the nuclear reactor containment vessel (1) and above the heat transfer tube (13) and containing cooling water; and
a gravity-driven cooling system (36) adapted to supply cooling water contained in the external pool container (35) into the heat transfer tube (13), utilizing gravity as drive force.

3. The nuclear reactor containment vessel cooling equipment according to claim 1 or 2, wherein
fins (40) are fitted to outer surface of the heat transfer tube (13).

4. A nuclear reactor containment vessel cooling equipment for suppressing internal pressure of a nuclear reactor containment vessel (1) containing a nuclear reactor pressure vessel (3), the equipment comprising:
a heat transfer tube (13) arranged in the nuclear reactor containment vessel (1) to allow cooling water to pass through inside thereof;
a forced cooling water circulation system (32a) for feeding cooling water from outside of the nuclear reactor containment vessel (1) into the heat transfer tube (13) by a pump (32);
an external pool container (35) arranged outside the nuclear reactor containment vessel (1) and above the heat transfer tube (13) and containing cooling water;
a gravity-driven cooling system (36) adapted to supply cooling water contained in the external pool container (35) into the heat transfer tube (13), utilizing gravity as drive force; and
at least one three-way valve (45) for selectively connecting the heat transfer tube (13) to either the forced cooling water circulation system (32a) or the gravity-driven cooling system (36).

5. A nuclear reactor containment vessel cooling equipment for suppressing internal pressure of a nuclear reactor containment vessel (1) containing a nuclear reactor pressure vessel (3), the equipment comprising:
a dry well cooler casing (14) arranged in the nuclear reactor containment vessel (1) and having an opening;
a heat transfer tube (13) arranged outside the dry well cooler casing (14) in the nuclear reactor containment vessel (1) to allow cooling water to pass through inside thereof;
a forced cooling water circulation system (32a) for feeding cooling water from outside of the nuclear reactor containment vessel (1) into the heat transfer tube (13) by a pump (32);
a blower (16) for mobilizing gas around the heat transfer tube (13) by causing it to pass through the dry well cooler casing (14) by way of the opening;
an external pool container (35) arranged outside the nuclear reactor containment vessel (1) and above the heat transfer tube (13) and containing cooling water; and
a gravity-driven cooling system (36) adapted to supply cooling water contained in the external pool container (35) into the heat transfer tube (13), utilizing gravity as drive force.

6. A nuclear reactor containment vessel cooling equipment for suppressing internal pressure of a nuclear reactor containment vessel (1) containing a nuclear reactor pressure vessel (3), the equipment comprising:
a heat transfer tube (13) arranged in the nuclear reactor containment vessel (1) to allow cooling water to pass through inside thereof;
a forced cooling water circulation system (32a) for feeding cooling water from outside of the nuclear reactor containment vessel (1) into the heat transfer tube (13) by a pump (32);
an external pool container (35) arranged outside the nuclear reactor containment vessel (1) and containing cooling water so as to make the water surface (35a) substantially at same level with the heat transfer tube (13); and
a gravity-driven cooling system (36) adapted to supply cooling water contained in the external pool container (35) into the heat transfer tube (13), utilizing gravity as drive force.

7. A nuclear reactor containment vessel cooling equipment for suppressing internal pressure of a nuclear reactor containment vessel (1) containing a nuclear reactor pressure vessel (3), the equipment comprising:
a heat transfer tube (13) arranged in the nuclear reactor containment vessel (1) to allow cooling water to pass through inside thereof;
a forced cooling water circulation system (32a) for feeding cooling water from outside of the nuclear reactor containment vessel (1) into the heat transfer tube (13) by a pump (32);
an external pool container (35) arranged outside the nuclear reactor containment vessel (1) and above the heat transfer tube (13) and containing cooling water;
a gravity-driven cooling system (36) adapted to supply cooling water contained in the external pool container (35) into the heat transfer tube (13), utilizing gravity as drive force; and
at least one valve (31, 37) for selectively connecting either the forced cooling water circuit system or the gravity-driven cooling system (36), the valve (31, 37) being adapted to be automatically switched according to a change in internal pressure of the nuclear reactor containment vessel (1).

8. A nuclear reactor containment vessel cooling equipment for suppressing internal pressure of a nuclear reactor containment vessel (1) containing a nuclear reactor pressure vessel (3), the equipment comprising:
a dry well cooler casing (14) arranged in the nuclear reactor containment vessel (1) and having an opening;
a heat transfer tube (13) arranged in the dry well cooler casing (14) to allow cooling water to pass through inside thereof;
a forced cooling water circulation system (32a) for feeding cooling water from outside of the nuclear reactor containment vessel (1) into the heat transfer tube (13) by a pump (32);
an external pool container (35) arranged outside the nuclear reactor containment vessel (1) and above the heat transfer tube (13) and containing cooling water;
a tank (83) arranged outside the nuclear reactor containment vessel (1) to contain cooling water;
a jet pump (87) arranged in the external pool container (35) to drive cooling water from inside of the external pool container (35) and the tank (83) toward the heat transfer tube (13);
a steam injector (85) for driving cooling water from inside of the tank (83) as drive water of the jet pump (87);
steam piping (82) for leading steam led from the heat transfer tube (13) to the external pool container (35) to the steam injector (85) as drive steam of the steam injector (85);
water piping (84) for leading cooling water from the inside of the tank (83) to the steam injector (85); and
ejection piping (86) for leading cooling water ejected from the steam injector (85) as drive water of the jet pump (87).

9. A nuclear reactor containment vessel cooling equipment for suppressing internal pressure of a nuclear reactor containment vessel (1) containing a nuclear reactor pressure vessel (3), the equipment comprising:
a heat transfer tube (13) arranged in the nuclear reactor containment vessel (1) to allow cooling water to pass through inside thereof;
a forced cooling water circulation system (32a) for feeding cooling water from outside of the nuclear reactor containment vessel (1) into the heat transfer tube (13) by a pump (32);
an external pool container (35) arranged outside the nuclear reactor containment vessel (1) and above the heat transfer tube (13) and containing cooling water;
a gravity-driven cooling system (36) adapted to supply cooling water contained in the external pool container (35) into the heat transfer tube (13), utilizing gravity as drive force; and
at least one valve (31 , 37) for selectively connecting the heat transfer tube (13) to either the forced cooling water circulation system (32a) or the gravity-driven cooling system (36);
wherein the gravity-driven cooling system (36) includes:
a first piping (36a) connected at an end thereof to a lower part of the heat transfer tube (13) and having other end thereof opened under water surface (35a) in the external pool container (35); and
a second piping (36b) connected at an end thereof to an upper part of the heat transfer tube (13) and having other end thereof opened above the water surface (35a) in the external pool container (35).

10. A nuclear reactor containment vessel cooling equipment for suppressing internal pressure of a nuclear reactor containment vessel (1) containing a nuclear reactor pressure vessel (3), the equipment comprising:
a heat transfer tube (13) arranged in the nuclear reactor containment vessel (1) to allow cooling water to pass through inside thereof;
a forced cooling water circulation system (32a) for feeding cooling water from outside of the nuclear reactor containment vessel (1) into the heat transfer tube (13) by a pump (32);
an external pool container (35) arranged outside the nuclear reactor containment vessel (1) and above the heat transfer tube (13) and containing cooling water;
a gravity-driven cooling system (36) adapted to supply cooling water contained in the external pool container (35) into the heat transfer tube (13), utilizing gravity as drive force; and
at least one valve (31, 37) for selectively connecting the heat transfer tube (13) to either the forced cooling water circulation system (32a) or the gravity-driven cooling system (36); wherein:
the gravity-driven cooling system (36) includes:
a first piping (36a) connected at an end thereof to a lower part of the heat transfer tube (13) and having other end thereof opened in the cooling water in the external pool container (35); and
a second piping (36b) connected at an end thereof to an upper part of the heat transfer tube (13) and having other end thereof opened above the opening of the first piping (36a) in the external pool container (35); and
an insulating material (67) is provided to surround at least part of the first piping (36a) in the nuclear reactor containment vessel (1).

11. A nuclear reactor containment vessel cooling equipment for suppressing internal pressure of a nuclear reactor containment vessel (1) containing a nuclear reactor pressure vessel (3), the equipment comprising:
a heat transfer tube (13) arranged in the nuclear reactor containment vessel (1) to allow cooling water to pass through inside thereof;
a forced cooling water circulation system (32a) for feeding cooling water from outside of the nuclear reactor containment vessel (1) into the heat transfer tube (13) by a pump (32);
an external pool container (35) arranged outside the nuclear reactor containment vessel (1) and above the heat transfer tube (13) and containing cooling water;
a gravity-driven cooling system (36) adapted to supply cooling water contained in the external pool container (35) into the heat transfer tube (13), utilizing gravity as drive force; and
at least one valve (31 , 37) for selectively connecting the heat transfer tube (13) to either the forced cooling water circulation system (32a) or the gravity-driven cooling system (36); wherein:
the gravity-driven cooling system (36) includes:
a first piping (36a) connected at an end thereof to a lower part of the heat transfer tube (13) and having other end thereof opened in the cooling water in the external pool container (35); and
a second piping (36b) connected at an end thereof to an upper part of the heat transfer tube (13) and having other end thereof opened above the opening of the first piping (36a) in the external pool container (35); and
an insulating material (69) is provided to surround at least part of the second piping (36b) in the cooling water in the external pool container (35).

12. A nuclear power plant comprising a nuclear reactor containment vessel cooling equipment according to any one of the above-described claims.
